# EUROPEAN PATENT SPECIFICATION

(11) **EP 4 230 500 B1**
(45) Date of publication and mention of the grant of the patent: **18.06.2025**
(21) Application number: 21881537.1
(22) Date of filing: 17.05.2021
(51) Int. Cl.: B61L 23/18, B60T 7/22, B60T 8/17, B60T 8/1755, B60T 8/32

(54) **VEHICLE BRAKING METHOD AND DEVICE, AND TRAIN**
FAHRZEUGBREMSVERFAHREN UND -VORRICHTUNG SOWIE ZUG
PROCÉDÉ ET DISPOSITIF DE FREINAGE DE VÉHICULE, ET TRAIN

(30) Priority: 19.10.2020 CN 202011118479
(43) Date of publication of application: 23.08.2023
(73) Proprietor: CRRC Qingdao Sifang Co., Ltd., Qingdao, Shandong 266111 (CN)
(72) Inventor: WANG, Tiannong, Qingdao, Shandong 266111 (CN); WANG, Yancui, Qingdao, Shandong 266111 (CN); YANG, Lili, Qingdao, Shandong 266111 (CN); TIAN, Qing, Qingdao, Shandong 266111 (CN); ZHANG, Zuwei, Qingdao, Shandong 266111 (CN)
(74) Representative: Prinz & Partner mbB
(86) International application number: PCT/CN2021/094001
(87) International publication number: WO 2022/083113

(56) References cited:
- WO-A1-2018/210500
- WO-A1-2019/110735
- WO-A1-2019/194017
- CN-A- 104 859 654
- CN-A- 104 859 654
- CN-A- 105 346 563
- CN-A- 112 172 870
- CN-A- 112 278 017
- CN-A- 112 278 017
- DE-A1- 102017 206 199
- JP-A- 2006 136 041
- JP-A- H03 176 799
- KR-A- 20160 133 731
- ZHENG ET AL: "Research on Interstation Tracking Interval of CBTC System Based on Train-train Communication", CONTROL AND INFORMATION TECHNOLOGY, no. 3, 1 March 2020 (2020-03-01), pages 81 - 88, XP055923688, ISSN: 2096-5427, DOI: 10.13889/j.issn.2096-5427.2020.03.016
- ZHENG, YI, YI ZHENG, YUNQING HU, HONGLIANG GENG, YE SUN, TAO SHEN, KE SUN: "Research on Interstation Tracking Interval of CBTC System Based on Train-train Communication", CONTROL AND INFORMATION TECHNOLOGY, no. 3, 1 March 2020 (2020-03-01), pages 81 - 88, XP055923688, ISSN: 2096-5427, DOI: 10.13889/j.issn.2096-5427.2020.03.016

## Description

This application claims priority to Chinese Patent Application No. 202011118479.0, titled "VEHICLE BRAKING METHOD AND DEVICE, AND TRAIN", filed on October 19, 2020 with the China National Intellectual Property Administration (CNIPA).

### FIELD

The present invention relates to the technical field of computers, and in particular to a method for braking a vehicle, a device for braking a vehicle and a train.

### BACKGROUND

In the conventional rail transit, an automatic train protection system (ATP) is usually used to measure the speed of the train. After the ATP is cut-off, a radar auxiliary protection system is used to measure the distance between a vehicle and a preceding vehicle in the same traveling direction in real time. In order to improve the safety of the train, it is significant to eliminate the risk of rear-end collision between the train and the preceding vehicle in the same traveling direction. Therefore, the train should be decelerated according to the braking capacity of the train itself before colliding with the preceding vehicle. However, it is insufficient to improve the safety of the train and reduce the risk of rear-end collisions relying on the driving experience of the train conductor alone.

In conclusion, the conventional radar auxiliary protection system after cutting-off ATP has a high risk of rear-end collision, resulting in a low safety of the train.

WO2019194017A1 discloses a forward monitoring device, an obstacle collision avoidance device and a train control device. The forward monitoring device includes: a region setting unit which is mounted in a train and sets a stereoscopic monitoring region that is in front of the train to be updatable on the basis of input train velocity information and line information that corresponds to a traveling position of the train; a field angle setting unit which sets a field angle of an image capturing device, which captures an image of the front of the train, so that an image corresponding to the entire monitoring region has a prescribed size or larger in the captured image; an image acquisition unit which acquires, from the image capturing device, the image of the front of the train; and an obstacle determination unit which determines whether there is an obstacle in the monitoring region on the basis of the image.

### SUMMARY

For purpose of improving travelling safety of the train with the radar auxiliary protection system after cutting-off ATP in the conventional technology, a method for braking a vehicle, a device for braking a vehicle and a train are provided according to the embodiments of the present invention, which can effectively lower the risk of rear-end collision with the preceding vehicle and improve the safety of train operation.

A method for braking a vehicle is provided according to the present invention, the method includes:
acquiring a distance between the vehicle and a preceding vehicle;
issuing an alarm in a case that the distance is less than or equal to a first threshold; and
receiving a first braking command triggered by a user, and braking the vehicle at a first preset deceleration, based on the first braking command; where the first threshold is obtained based on a sum of a target equivalent virtual stopping distance and an emergency braking distance, the target equivalent virtual stopping distance is obtained based on at least one of a first equivalent virtual stopping distance and a second equivalent virtual stopping distance, the first equivalent virtual stopping distance is a distance traveled by the vehicle during acquiring the distance between the vehicle and the preceding vehicle, the second equivalent virtual stopping distance is a distance traveled by the vehicle during triggering the first braking command by the user, and the emergency braking distance is a distance traveled by the vehicle once braking the vehicle at the first preset deceleration, wherein the emergency braking distance is obtained based on at least one of a first braking distance, a second braking distance and a third braking distance, and the first braking distance is a distance traveled by the vehicle in a case that all bogies are used for braking in a normal operating status, the second braking distance is a distance traveled by the vehicle in a case that all bogies are used for braking in a wet rail status, and the third braking distance is a distance traveled by the vehicle while braking in the wet rail status with a preset number of bogies being cut-off,
wherein the method further comprises:
   in a case that the distance is less than or equal to a second threshold, issuing an alarm, wherein the second threshold is greater than the first threshold, and the second threshold is determined based on the first threshold and a minimum alarm interval;
   receiving a second braking command triggered by the user; and
   braking the vehicle at a second preset deceleration, based on the second braking command, wherein the second preset deceleration is less than the first preset deceleration.

In an embodiment, the target equivalent virtual stopping distance is a sum of the first equivalent virtual stopping distance and the second equivalent virtual stopping distance.

In an embodiment, the emergency braking distance is a maximum value among the first braking distance, the second braking distance and the third braking distance.

A device for braking a vehicle is provided according to the present invention, the device includes:
an acquisition unit, configured to acquire a distance between the vehicle and a preceding vehicle;
a first alarm unit, configured to issue an alarm in a case that the distance is less than or equal to a first threshold; and
a first braking unit, configured to receive a first braking command triggered by a user, and brake the vehicle at a first preset deceleration based on the first braking command; wherein, the first threshold is obtained based on a sum of a target equivalent virtual stopping distance and an emergency braking distance, the target equivalent virtual stopping distance is obtained based on at least one of a first equivalent virtual stopping distance and a second equivalent virtual stopping distance, the first equivalent virtual stopping distance is a distance traveled by the vehicle during acquiring the distance between the vehicle and the preceding vehicle, the second equivalent virtual stopping distance is a distance traveled by the vehicle during triggering the first braking command by the user, and the emergency braking distance is a distance traveled by the vehicle once braking the vehicle at the first preset deceleration, wherein the emergency braking distance is obtained based on at least one of a first braking distance, a second braking distance and a third braking distance, and the first braking distance is a distance traveled by the vehicle in a case that all bogies are used for braking in a normal operating status, the second braking distance is a distance traveled by the vehicle in a case that all bogies are used for braking in a wet rail status, and the third braking distance is a distance traveled by the vehicle while braking in the wet rail status with a preset number of bogies being cut-off,
wherein the device further comprises:
   a second alarm unit, configured to issue an alarm in a case that the distance is less than or equal to a second threshold, wherein the second threshold is greater than the first threshold, the second threshold is determined based on the first threshold and a minimum alarm interval; and
   a second braking unit, configured to receive a second braking command triggered by the user, and brake the vehicle at a second preset deceleration based on the second braking command, wherein the second preset deceleration is less than the first preset deceleration.

In an embodiment, the target equivalent virtual stopping distance is a sum of the first equivalent virtual stopping distance and the second equivalent virtual stopping distance.

In an embodiment, the emergency braking distance is a maximum value among the first braking distance, the second braking distance and the third braking distance.

A train is provided according to the present invention, the train includes a device for braking a vehicle, where the device for braking a vehicle is configured to implement the method for braking a vehicle according to the embodiments of the present invention.

Compared with the conventional technology, the present invention has advantages as follows.

A method for braking a vehicle is provided according to the present invention, the method includes: acquiring a distance between the vehicle and a preceding vehicle; issuing an alarm in a case that the distance is less than or equal to a first threshold; and receiving a first braking command triggered by a user, and braking the vehicle at a first preset deceleration, based on the first braking command; where the first threshold is obtained based on a sum of a target equivalent virtual stopping distance and an emergency braking distance, the target equivalent virtual stopping distance is obtained based on at least one of a first equivalent virtual stopping distance and a second equivalent virtual stopping distance, the first equivalent virtual stopping distance is a distance traveled by the vehicle during acquiring the distance between the vehicle and the preceding vehicle, the second equivalent virtual stopping distance is a distance traveled by the vehicle during triggering the first braking command by the user, and the emergency braking distance is a distance traveled by the vehicle once braking the vehicle at the first preset deceleration. It can be seen that, in the embodiments of the present invention, the distance with the preceding vehicle is measured and compared with a threshold In a case that the measured distance is less than or equal to the threshold, braking of the train is started. The threshold of braking is determined by the equivalent virtual stopping distance and the emergency braking distance limited by the braking performance of the train itself. The method for braking a vehicle provided according to the embodiments of the present invention can effectively reduce the risk of rear-end collision with the preceding vehicle and improve the train operation safety by determining the threshold of braking considering both the ranging capability of the radar protection system and the emergency braking performance of the train.

### BRIEF DESCRIPTION OF THE DRAWINGS

In order to more clearly explain the technical solutions in the embodiments of the present invention or in the conventional technology, the drawings used in the description of the embodiments or the conventional technology are briefly introduced hereinafter. It is apparent that the drawings in the following description illustrate only some embodiments of the present invention. Other drawings may be obtained by those skilled in the art without creative efforts based on the provided drawings.
Figure 1 is a flow chart of a method for braking a vehicle according to an embodiment of the present invention, and
Figure 2 is a structural block diagram of a device for braking a vehicle according to an embodiment of the present invention.

### DETAILED DESCRIPTION OF EMBODIMENTS

In order to enable those skilled in the art to better understand the solution of the present invention, the technical solutions in the embodiment of the present invention will be clearly and completely described below in conjunction with the drawings in the embodiments of the present invention. It is apparent that the described embodiments are only part of the embodiments of the present invention, rather than all of the embodiments. Based on the embodiments of the present invention, all other embodiments obtained by those of ordinary skilled in the art without creative efforts fall within the protection scope of the present invention.

It can be seen from the background technology that after the train cuts-off ATP during operation, the radar auxiliary protection system is used for measuring the distance with the preceding vehicle (i.e., the vehicle ahead). Currently, the ranging capability of the radar auxiliary protection system is 1 kilometer (km). For the sake of lowering the risk of rear-end collision with vehicle ahead, both the ranging performance of the radar auxiliary protection system and the braking capability of the train itself should be considered when it comes to improving the train operation safety.

Hence, in the embodiments of the present invention, the distance with the preceding vehicle is measured and compared with a threshold. In a case that the measured distance is less than or equal to the threshold, braking of the train is started. The threshold of braking is determined by the equivalent virtual stopping distance and the braking distance limited by the braking performance of the train itself. The method for braking a vehicle provided according to the embodiments of the present invention can effectively reduce the risk of rear-end collision with the preceding vehicle and improve the train operation safety by determining the threshold of braking based on both the ranging capability of the radar protection system and the emergency braking performance of the train.

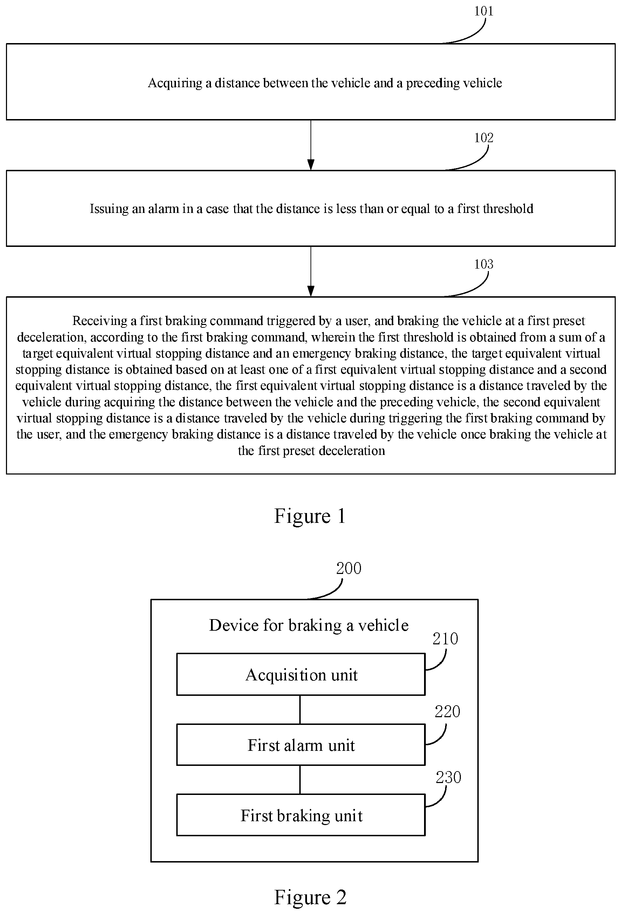

Referring to Figure 1, Figure 1 is a flow chart of a method for braking a vehicle according to an embodiment of the present invention.

According to the present invention, the method for braking a vehicle may be applied, for example, to a vehicle controller. The method specifically includes steps as follows.

In step 101, a distance between the vehicle and a preceding vehicle is acquired.

According to an embodiment of the present invention, when the train is traveling, a distance between the vehicle and the preceding vehicle in the same traveling direction is obtained in real time, so as to perform subsequent processing based on the obtained distance. The radar auxiliary protection system may be used to obtain the distance between the vehicle and the preceding vehicle, that is, the radar auxiliary protection system is used for detecting the distance and sending the detecting result to the controller of the train. Specifically, the radar auxiliary protection system utilizes radio frequency technology. The radar auxiliary protection system of the vehicle first sends the electromagnetic wave for ranging to the radar auxiliary protection system of the preceding vehicle. And then, the radar auxiliary protection system of the preceding vehicle identifies that the received electromagnetic wave is from the radar auxiliary protection system of vehicle behind, and returns response electromagnetic wave to the radar auxiliary protection system of the vehicle behind. The radar auxiliary protection system of the vehicle determines the distance between the vehicle and the preceding vehicle based on the transmission speed of the electromagnetic wave and the round-trip time once receiving the response electromagnetic wave from the radar auxiliary protection system of the preceding vehicle.

Obviously, in addition to the radar auxiliary protection system, the embodiment of the present invention may also use other ranging means to detect the distance between the vehicle and the preceding vehicle, such as infrared rays, etc., which will not be detailed here. For the convenience of description, the radar auxiliary protection system is used as an example for illustration below.

In step 102, an alarm is issued in a case that the distance is less than or equal to a first threshold.

According to the embodiment of the present invention, the first threshold represents that the distance between the vehicle and the preceding vehicle is at a certain constant value, and this value is irrelevant to the relative speed of the vehicle and the preceding vehicle. If the detected distance between the vehicle and the preceding vehicle is less than or equal to the first threshold, it indicates that the distance between the vehicle and the preceding vehicle may be too close and the risk of rear-end collision may be high. In this case, the vehicle driver may be alerted to remind the safety issues of the vehicle so as to reduce the probability of rear-end collision accidents.

In step 103, a first braking command triggered by a user is received and braking of the vehicle is implemented at a first preset deceleration based on the first braking command. The first threshold is obtained based on a sum of a target equivalent virtual stopping distance and an emergency braking distance. The target equivalent virtual stopping distance is obtained based on at least one of a first equivalent virtual stopping distance and a second equivalent virtual stopping distance. The first equivalent virtual stopping distance is a distance traveled by the vehicle during acquiring the distance between the vehicle and the preceding vehicle. The second equivalent virtual stopping distance is a distance traveled by the vehicle during triggering the first braking command by the user. The emergency braking distance is a distance traveled by the vehicle after braking the vehicle at the first preset deceleration.

According to the embodiment of the present invention, after detecting that the distance between the vehicle and the preceding vehicle is less than or equal to the first threshold, the controller of the vehicle performs alarm processing. After receiving the alarm, the user triggers the first braking command. The first braking command refers to a command to brake the vehicle. While braking the train according to the first braking command, there is a corresponding first preset deceleration for braking. The first preset deceleration corresponds to the first braking command, and the first preset deceleration is at a constant value. Specifically, the first preset deceleration may be the deceleration for emergency braking. As an example, the first preset deceleration may be the maximum deceleration under emergency braking, and the maximum deceleration under emergency braking may represent the braking performance of the vehicle.

While traveling, the vehicle constantly detects whether the distance between the vehicle and the preceding vehicle is less than or equal to the first threshold, and the first threshold is the sum of the target equivalent virtual stopping distance and the emergency braking distance. The target equivalent virtual stopping distance represents the distance traveled by the vehicle before braking. Because the train is still traveling during the time interval of detecting the distance between vehicles, issuing the alarm, and receiving the alarm to start to brake, the distance traveled by the train during this time interval is the target equivalent virtual stopping distance. The emergency braking distance represents the distance traveled by the vehicle in the interval from braking the vehicle to the vehicle being stopped. In actual situations, the radar auxiliary protection system may have a ranging deviation. Hence, for the safety of the train, the ranging deviation of the radar auxiliary protection system may be set. Specifically, the first threshold is determined by the ranging deviation and the sum of the target equivalent virtual stopping distance and the emergency braking distance. As an example, the first threshold is a product of the sum of the target equivalent virtual stopping distance and the emergency braking distance multiplying the ranging deviation.

Since the first threshold is the sum of the target equivalent virtual stopping distance and the emergency braking distance, the target equivalent virtual stopping distance is to be determined in order to determine the first threshold. The target equivalent virtual stopping distance may be obtained based on at least one of a first equivalent virtual stopping distance and a second equivalent virtual stopping distance.

In an implementation, the target equivalent virtual stopping distance may be obtained based on the first equivalent virtual stopping distance. The first equivalent virtual stopping distance refers to the distance traveled by the vehicle during detecting the distance between the vehicle and the preceding vehicle. In other words, the vehicle is still traveling during the time period of detecting the distance between the vehicle and the preceding vehicle. Specifically, the first equivalent virtual stopping distance may be determined by from the time spent by the radar protection system in distance detection and the maximum traveling speed of the vehicle. As an example, the time spent by the radar protection system in distance detection is t1 in unit of e.g. seconds (s); the maximum traveling speed of the vehicle is v1 in unit of e.g. meters per second (m/s); then the first equivalent virtual stopping distance L1 may be the product of the time spent by the radar protection system in distance detection multiplying the maximum traveling speed of the vehicle, that is, the following relationship: L1 = v1 × t1, in the unit of e.g. meter (m).

In another implementation, the target equivalent virtual stopping distance may be obtained based on the second equivalent virtual stopping distance. The second equivalent virtual stopping distance refers to the distance traveled by the vehicle in the process of the user triggering the braking command, that is, the time spent by the user from receiving the distance alarm to triggering the braking command. Specifically, the second equivalent virtual stopping distance may be determined by a certain constant user reaction time and the traveling speed of the vehicle. As an example, the constant user reaction time is t2 in the unit of e.g. seconds (s); the maximum traveling speed of the vehicle is v1 in the unit of e.g. meter per second (m/s); then the second equivalent virtual stopping distance L2 may be the product of the constant user reaction time multiplying the maximum traveling speed of the vehicle, that is, the following relationship: L2 = v1 × t2.

In yet another implementation, the target equivalent virtual stopping distance may be obtained jointly based on the first equivalent virtual stopping distance and the second equivalent virtual stopping distance. Specifically, the target equivalent virtual stopping distance L may be the sum of the first equivalent virtual stopping distance and the second equivalent virtual stopping distance, that is, L = L1 + L2. As an example, in the calculation of the first equivalent virtual stopping distance, the time t1 spent by the radar protection system in detecting the distance is 1s, and the maximum traveling speed v1 of the vehicle is 120 kilometers per hour (km/h), then the first equivalent virtual stopping distance L1 = v1 × t1 = 120 km/h ÷ 3.6 × 1s = 33.3 m, where the division by 3.6 in the equation is to convert the unit of the maximum traveling speed from kilometer per hour to meter per second. In the calculation of the second equivalent virtual stopping distance, the constant user reaction time t2 is 1.15 s, and the maximum traveling speed v1 of the vehicle is 120km/h, then the second equivalent virtual stopping distance L2 =v1 × t2 =120 km/h ÷ 3.6 × 1.15s =38.3 m, where the division by 3.6 in the equation is to convert the unit of the maximum traveling speed from kilometer per hour to meter per second. The target equivalent virtual stopping distance may be the sum of the first equivalent virtual stopping distance and the second equivalent virtual stopping distance, i.e., the target equivalent virtual stopping distance L=L1+L2=33.3+38.3=71.6m.

Since the first threshold is the sum of the target equivalent virtual stopping distance and the emergency braking distance, the emergency braking distance is to be determined in order to determine the first threshold. The emergency braking distance may be the distance traveled by the vehicle after braking the vehicle at the first preset deceleration. The emergency braking distance may be obtained based on at least one of the first braking distance, the second braking distance and the third braking distance.

In an implementation, the emergency braking distance may be obtained based on the first braking distance. The first braking distance is a distance traveled by the vehicle in a case that all bogies are used for braking in a normal operating status. The first braking distance may be determined by using the first preset deceleration and the traveling speed of the vehicle. Specifically, the first preset deceleration may be the maximum deceleration when using all bogies for emergency braking in the normal operating status. The traveling speed of the vehicle may be the maximum traveling speed. As an example, in the normal operating status, the maximum deceleration when all bogies are used for emergency braking is a1 in the unit of e.g. meter per second squared (m/s²); and the maximum traveling speed of the vehicle is v1 in the unit of e.g. meter per second (m/s); then the first braking distance S1 may be the ratio of the square of the maximum traveling speed of the vehicle to the maximum deceleration in case of using all bogies for emergency braking in the normal operating status, i.e., the following relationship: S1 = v1²/2a1.

In another implementation, the emergency braking distance may be obtained based on the second braking distance. The second braking distance is a distance traveled by the vehicle in a case that all bogies are used for braking in a wet rail status. The second braking distance may be determined by using the first preset deceleration and the traveling speed of the vehicle. Specifically, the first preset deceleration may be the maximum deceleration in the case that all bogies are used for emergency braking in the wet rail status, and the maximum deceleration in the case that all bogies are used for emergency braking in the wet rail status is less than the maximum deceleration in the case that all bogies are used for emergency braking in the normal operating status. The traveling speed of the vehicle may be the maximum traveling speed. As an example, the maximum deceleration in the case that all bogies are used for emergency braking in the wet rail status is a2 in the unit of meter per second squared (m/s²); and the maximum traveling speed of the vehicle is v1 in the unit of e.g. meter per second (m/s); then the second braking distance S2 may be the ratio of the square of the maximum traveling speed of the vehicle to the maximum deceleration in the case that all bogies are used for emergency braking in the wet rail status, i.e., the following relationship: S2 = v1²/2a2.

In yet another implementation, the emergency braking distance may be obtained based on the third braking distance. The third braking distance is a distance traveled by the vehicle while braking in a wet rail status with a preset number of bogies being cut-off. The third braking distance may be determined by using the first preset deceleration and the traveling speed of the vehicle. Specifically, the first preset deceleration may be the maximum deceleration while implementing emergency braking in the wet rail status with a preset number of bogies being cut-off, and the traveling speed of the vehicle may be a limited speed of the vehicle with a preset number of bogies being cut-off. As an example, the maximum deceleration while implementing emergency braking in the wet rail status with a preset number of bogies being cut-off is a3, where a3=a2×remaining number of bogies ÷ total number of bogies, and the unit is meter per second squared (m/s²); the limited speed of the vehicle with a preset number of bogies being cut-off is v2 in the unit of e.g. meter per second (m/s); then the third braking distance S3 may be the ratio of the square of the limited speed of the vehiclewith a preset number of bogies being cut-off to the maximum deceleration while implementing emergency braking in the wet rail status with a preset number of bogies being cut-off, i.e., the following relationship: S3=v2² /2a3. Cutting-off the preset number of bogies is determined according to actual conditions, as an example, one bogie may be cut-off.

In yet another implementation, the emergency braking distance may be jointly obtained according to the first braking distance, the second braking distance, and the third braking distance. Specifically, the emergency braking distance S may be the maximum value among the first braking distance, the second braking distance and the third braking distance. As an example, in the calculation of the first braking distance, the maximum deceleration a1 in the normal operating status with all bogies being used for emergency braking is 1.2 m/s², the maximum traveling speed v1 of the vehicle is 120 km/h, then the first braking distance S1 = v1² / 2a1 = (120 km/h ÷ 3.6) × (120 km/h ÷ 3.6) / (2 × 1.2 m/s²) = 463.0 m. In the calculation of the second braking distance, the maximum deceleration a2 in the wet rail status with all bogies being used for emergency braking is 0.91 m/s², and the maximum traveling speed v1 of the vehicle is 120km/h, then the second braking distance S2 = v1² / 2a2 = (120 km/h ÷ 3.6) × (120 km/h ÷ 3.6) / (2 × 0.91 m/s²) = 610.5 m. In the calculation of the third braking distance, the maximum deceleration a3 while implementing emergency braking in the wet rail status with a preset number of bogies being cut-off is 0.9 m/s² × 11 ÷ 12, the limited speed v2 of the vehicle with a preset number of bogies being cut-off is 110 km/h, then the third braking distance S3 = v2² / 2a3 = (110 km/h ÷ 3.6) × (110 km/h ÷ 3.6) / (2 × 0.91 m/s² × 11 ÷ 12) = 559.6 m. Since emergency braking distance may be the maximum value among the first braking distance, the second braking distance and the third braking distance, the emergency braking distance is the second braking distance, i.e., S = S2 = 610.5 m.

The first threshold Y1 is the sum of the target equivalent virtual stopping distance and the emergency braking distance, i.e., Y1=L+S. As an example, the first threshold Y1=L+S=71.6m+610.5m=682.1m. In actual conditions, given that the ranging deviation issue of the radar auxiliary protection system, in order to increase the safety of the train, the ranging deviation may be 5%, the first threshold Y1=(L+S)×(1+5%)=682.1×(1+5%)=716.2m. In addition, considering the redundancy of the braking distance for the train in the actual conditions, the first threshold may be rounded up to the nearest integer, i.e., the first threshold may be 720m.

In the actual conditions of train traveling, the alarm for the first threshold corresponds to the situation of emergency braking of the train. In other words, if the distance between the vehicle and the preceding vehicle is less than the first threshold, there is a greater risk of rear-end collision unless emergency braking is performed. In order to improve the safety of the train, before detecting the first threshold corresponding to emergency braking, the second threshold corresponding to service braking may also be detected. Compared with emergency braking, service braking has a longer braking distance, which can allow a longer distance for the train to brake and can further reduce the risk of rear-end collision of the train.

In the embodiment of the present invention, the distance between the vehicle and the preceding vehicle may be compared with the second threshold. In a case that the detected distance is less than or equal to the second threshold, an alarm process is performed, where the second threshold is greater than the first threshold. The second threshold is greater than the first threshold corresponding to emergency braking, that is, the second threshold corresponds to the alarm distance for service braking. The detected distance between the vehicle and the preceding vehicle is less than or equal to the second threshold, indicating that the distance between the vehicle and the preceding vehicle is less than or equal to a certain constant value, i.e., the vehicle is approaching to the preceding vehicle and there may be a risk of rear-end collision, the vehicle driver can be alarmed so as to remind the safety issue of the vehicle and reduce the probability of rear-end collisions.

The second threshold may be determined based on the first threshold and a minimum alarm interval. The minimum alarm interval is the time interval between the alarm for the first threshold and the alarm for the second threshold. The time interval cannot be too short, otherwise there will be continuous alarms and confusion to the judgment of the user, causing unnecessary driving risks. Specifically, the second threshold may be determined based on the first threshold, the minimum alarm interval and the traveling speed of the vehicle. As an example, the traveling speed of the vehicle may be the maximum traveling speed v1 in the unit of e.g. meter per second (m/s), the minimum alarm interval may be t3 in the unit of e.g. seconds(s), then the second threshold Y2 may be the sum of the first threshold Y1 and the product of the maximum traveling speed and the minimum alarm interval, that is, the following relationship: Y2=Y1+v1×t3. When specifically calculating the second threshold, the traveling speed of the vehicle may be the maximum traveling speed v1, v1 is 120km/h, and the minimum alarm interval t3 is 5s, then the second threshold Y2=Y1+v1×t3=720m+120km/h÷3.6×5s=886.7m.

In the embodiment of the present invention, after detecting that the distance between the vehicle and the preceding vehicle is less than or equal to the second threshold, an alarm process is performed. After receiving the alarm, the user triggers a second braking command. The second braking command refers to the command to brake the vehicle. When braking according to the second braking command, there is a corresponding second preset deceleration for braking. The second preset deceleration corresponds to the second braking command. The second preset deceleration is less than the first preset deceleration, and the second preset deceleration is a constant value. Specifically, the second preset deceleration may be the deceleration during service braking. As an example, the second preset deceleration may be the deceleration during service braking, and the deceleration during service braking may be 1.0 m/s².

In actual conditions, the second threshold may be determined based on the sum of the target equivalent virtual stopping distance and the service braking distance. The target equivalent virtual stopping distance of the second threshold may be identical to the target equivalent virtual stopping distance of the first threshold, that is, the target equivalent virtual stopping distance may be obtained jointly based on the first equivalent virtual stopping distance and the second equivalent virtual stopping distance. Specifically, the target equivalent virtual stopping distance L may be the sum of the first equivalent virtual stopping distance and the second equivalent virtual stopping distance, i.e., L=L1+L2= 71.6m. The service braking distance is the distance traveled by the vehicle when braking at the second preset deceleration. The second preset deceleration is less than the first preset deceleration. The service braking distance may be obtained based on at least one of the first service braking distance, the second service braking distance and the third service braking distance. Specifically, the service braking distance S' may be the maximum value among the first service braking distance, the second service braking distance and the third service braking distance. As an example, in the calculation of the first service braking distance, the maximum deceleration a1' when all bogies are used for service braking in the normal operating status is 1.0 m/s², the maximum traveling speed v1 of the vehicle is 120 km/h, then the first service braking distance S1' = v1² / 2a1' = (120 km/h ÷ 3.6) × (120 km/h ÷3.6) / (2×1.0 m/s²) = 555.6 m. In the calculation of the second service braking distance, the maximum deceleration a2 when all bogies are used for service braking in the wet rail status is 0.91 m/s², and the maximum traveling speed v1 of the vehicle is 120 km/h, then the second service braking distance S2' = v1² / 2a2 = (120 km/h ÷ 3.6) × (120 km/h ÷ 3.6) / (2 × 0.91 m/s²) = 610.5 m. In the calculation of the third service braking distance, the maximum deceleration a3 while implementing emergency braking in the wet rail status with one bogie being cut-off is 0.91 m/s² ×11÷12, and the limited speed v2 of the vehicle with one bogie being cut-off is 110 km/h, then the third service braking distance S3' = v2² / 2a3 = (110 km/h ÷ 3.6) × (110 km/h ÷ 3.6) / (2 × 0.91 m/s² × 11 ÷ 12) = 559.6 m. Since the service braking distance may be the maximum value among the first service braking distance, the second service braking distance and the third service braking distance, the service braking distance is the second service braking distance, that is, S' = S2' = 610.5 m. The second threshold Y2 is the sum of the target equivalent virtual stopping distance and the service braking distance, i.e., Y2 = L + S'. As an example, the second threshold Y2 = L + S' = 71.6 m + 610.5 m=682.1 m. In actual conditions, given the ranging deviation of the radar auxiliary protection system, in order to increase the safety of the train, the maximum value of the ranging deviation may be 5%, then the second threshold Y2 = (L + S') × (1 + 5%) = 682.1 × (1 + 5%) = 716.2 m.

According to an embodiment of the present invention, the value determined by the first threshold and the minimum alarm interval may be compared with the maximum value of the sum of the target equivalent virtual stopping distance and the service braking distance. In this case, the larger one of the two may be determined as the second threshold. As an example, the first threshold and the minimum alarm interval determine the second threshold Y2 = Y1 + v1 × t3 = 720 m + 120 km/h ÷ 3.6 × 5 s = 886.7 m. While, the sum of the target equivalent virtual stopping distance and the service braking distance determines the second threshold Y2 = (L + S') × (1 + 5 %) = 682.1 × (1 + 5 %) = 716.2 m. After numerical comparison, it can be seen that the value determined by using the first threshold and the minimum alarm time is a larger value of the second threshold, hence, the value determined by using the first threshold and the minimum alarm interval is determined as the second threshold.

It can be seen that, in the embodiments of the present invention, the distance with the preceding vehicle is measured and compared with a threshold. In a case that the measured distance is less than or equal to the threshold, braking of the train is started. The threshold of braking is determined by the equivalent virtual stopping distance and the braking distance limited by the braking performance of the train itself. The method for braking a vehicle provided according to the embodiments of the present invention can effectively reduce the risk of rear-end collision with the preceding vehicle and improve the train operation safety by determining the threshold of braking considering both the ranging capability of the radar protection system and the braking performance of the train.

Based on the method for braking a vehicle provided in the above embodiments, a device for braking a vehicle is further provided according to the embodiment of the present invention, the operating principle of which will be described in detail below with reference to the drawing.

Referring to Figure 2, Figure 2 is a structural block diagram of a device 200 for braking a vehicle according to an embodiment of the present invention.

The device 200 for braking a vehicle provided according to the embodiment of the present invention includes:
an acquisition unit 210, configured to acquire a distance between the vehicle and a preceding vehicle;
a first alarm unit 220, configured to issue an alarm in a case that the distance is less than or equal to a first threshold; and
a first braking unit 230, configured to receive a first braking command triggered by a user, and brake the vehicle at a first preset deceleration according to the first braking command; wherein, the first threshold is obtained based on a sum of a target equivalent virtual stopping distance and an emergency braking distance, the target equivalent virtual stopping distance is obtained based on at least one of a first equivalent virtual stopping distance and a second equivalent virtual stopping distance, the first equivalent virtual stopping distance is a distance traveled by the vehicle during acquiring the distance between the vehicle and the preceding vehicle, the second equivalent virtual stopping distance is a distance traveled by the vehicle during triggering the first braking command by the user, and the emergency braking distance is a distance traveled by the vehicle once braking the vehicle at the first preset deceleration.

In a possible implementation, the target equivalent virtual stopping distance is a sum of the first equivalent virtual stopping distance and the second equivalent virtual stopping distance.

In a possible implementation, the emergency braking distance is obtained based on at least one of a first braking distance, a second braking distance and a third braking distance, and the first braking distance is a distance traveled by the vehicle in a case that all bogies are used for braking in a normal operating status, the second braking distance is a distance traveled by the vehicle in a case that all bogies are used for braking in a wet rail status, and the third braking distance is a distance traveled by the vehicle while braking in the wet rail status with a preset number of bogies being cut-off.

In a possible implementation, the emergency braking distance is the maximum value among the first braking distance, the second braking distance and the third braking distance.

In a possible implementation, the device for braking a vehicle 200 further includes:
a second alarm unit, configured to issue an alarm in a case that the distance is less than or equal to a second threshold; where the second threshold is greater than the first threshold, and the second threshold is determined based on the first threshold and a minimum alarm interval; and
a second braking unit, configured to receive a second braking command triggered by the user, and brake the vehicle at a second preset deceleration based on the second braking command, where the second preset deceleration is less than the first preset deceleration.

Since the device 200 for braking a vehicle corresponds to the method for braking a vehicle provided in the above method embodiments, the specific implementation of each unit of the device 200 is of the same concept as the above method embodiment, the specific implementation of each unit of the vehicle braking device 200 may be referred to the description of the above method embodiments, which will not be repeated here.

According to an embodiment of the present invention, a train is provided, including a device for braking a vehicle, where the device for braking a vehicle may be used to implement the method for braking a vehicle according to any one of the embodiments of the present invention.

When introducing elements of the various embodiments of the present invention, the articles "a," "an," "the," and "said" are intended to indicate that there are one or more of elements. The words "comprising", "containing" and "having" are all inclusive and indicate that there may be other elements in addition to the listed elements.

It should be noted that those of ordinary skill in the art can understand that all or part of the processes in the above method embodiments may be implemented by hardware under instruction of a computer program, and the program may be stored in a computer-readable storage medium. When the program is executed, the processes of the above-mentioned method embodiments may be implemented. The storage medium may be a magnetic disk, an optical disk, a read-only memory (ROM) or a random access memory (RAM), etc.

The embodiments of the invention are described in a progressive way, each of which emphasizes the differences from others, and the same or similar elements among the embodiments can be referred to each other. In particular, since the device embodiments are basically similar to the method embodiments, the description is relatively simple and for relevant matters references may be made to the description of the method. The device embodiments described above are merely illustrative, in which the units and modules described as separate components may be or may not be physically separated. Part or all of the units and modules may be selected according to practical needs to achieve the purpose of the solution of the embodiments. It can be understood and implemented by those skilled in the art without creative efforts.

Specific embodiments of the present invention are set forth above. However, it is to be noted that various changes and modifications may be made by those skilled in the art without departing from the principle of the invention, and these changes and modifications should fall in the scope of protection of this invention, with the scope of protection as defined in the appended claims.

## Claims

1. A method for braking a vehicle, comprising:
acquiring (101) a distance between the vehicle and a preceding vehicle;
issuing (102) an alarm in a case that the distance is less than or equal to a first threshold;
receiving (103) a first braking command triggered by a user; and
braking (103) the vehicle at a first preset deceleration, according to the first braking command;
**characterized in that**,
the first threshold is obtained from a sum of a target equivalent virtual stopping distance and an emergency braking distance, the target equivalent virtual stopping distance is obtained based on at least one of a first equivalent virtual stopping distance and a second equivalent virtual stopping distance, the first equivalent virtual stopping distance is a distance traveled by the vehicle during acquiring the distance between the vehicle and the preceding vehicle, the second equivalent virtual stopping distance is a distance traveled by the vehicle during triggering the first braking command by the user, and the emergency braking distance is a distance traveled by the vehicle once braking the vehicle at the first preset deceleration, and **in that**
the emergency braking distance is obtained based on at least one of a first braking distance, a second braking distance and a third braking distance, and the first braking distance is a distance traveled by the vehicle in a case that all bogies are used for braking in a normal operating status, the second braking distance is a distance traveled by the vehicle in a case that all bogies are used for braking in a wet rail status, and the third braking distance is a distance traveled by the vehicle while braking in the wet rail status with a preset number of bogies being cut-off, the method further comprises:
in a case that the distance is less than or equal to a second threshold, issuing an alarm, the second threshold is greater than the first threshold, and the second threshold is determined based on the first threshold and a minimum alarm interval;
receiving a second braking command triggered by the user; and
braking the vehicle at a second preset deceleration, based on the second braking command, the second preset deceleration is less than the first preset deceleration.

2. The method according to claim 1, wherein the target equivalent virtual stopping distance is a sum of the first equivalent virtual stopping distance and the second equivalent virtual stopping distance.

3. The method according to claim 1, wherein the emergency braking distance is a maximum value among the first braking distance, the second braking distance and the third braking distance.

4. A device for braking a vehicle, comprising:
an acquisition unit (210), configured to acquire a distance between the vehicle and a preceding vehicle;
a first alarm unit (220), configured to issue an alarm in a case that the distance is less than or equal to a first threshold; and
a first braking unit (230), configured to receive a first braking command triggered by a user, and brake the vehicle at a first preset deceleration based on the first braking command;
**characterized in that**,
the first threshold is obtained from a sum of a target equivalent virtual stopping distance and an emergency braking distance, the target equivalent virtual stopping distance is obtained based on at least one of a first equivalent virtual stopping distance and a second equivalent virtual stopping distance, the first equivalent virtual stopping distance is a distance traveled by the vehicle during acquiring the distance between the vehicle and the preceding vehicle, the second equivalent virtual stopping distance is a distance traveled by the vehicle during triggering the first braking command by the user, and the emergency braking distance is a distance traveled by the vehicle once braking the vehicle at the first preset deceleration, the emergency braking distance is obtained based on at least one of a first braking distance, a second braking distance and a third braking distance, and the first braking distance is a distance traveled by the vehicle in a case that all bogies are used for braking in a normal operating status, the second braking distance is a distance traveled by the vehicle in a case that all bogies are used for braking in a wet rail status, and the third braking distance is a distance traveled by the vehicle while braking in the wet rail status with a preset number of bogies being cut-off,
the device further comprises:
a second alarm unit, configured to issue an alarm in a case that the distance is less than or equal to a second threshold, wherein the second threshold is greater than the first threshold, the second threshold is determined based on the first threshold and a minimum alarm interval; and
a second braking unit, configured to receive a second braking command triggered by the user, and brake the vehicle at a second preset deceleration based on the second braking command, wherein the second preset deceleration is less than the first preset deceleration.

5. The device according to claim 4, wherein the target equivalent virtual stopping distance is a sum of the first equivalent virtual stopping distance and the second equivalent virtual stopping distance.

6. The device according to claim 4, wherein the emergency braking distance is a maximum value among the first braking distance, the second braking distance and the third braking distance.

7. A train comprising a device for braking a vehicle, wherein the device is configured to implement the method according to any one of claims 1 to 3.

## Patentansprüche

1. Verfahren zum Bremsen eines Fahrzeugs, das Folgendes umfasst:
Erfassen (101) eines Abstands zwischen dem Fahrzeug und einem vorausfahrenden Fahrzeug,
Ausgeben (102) eines Alarms in einem Fall, in dem der Abstand kleiner oder gleich einem ersten Schwellenwert ist,
Empfangen (103) eines von einem Benutzer ausgelösten ersten Bremsbefehls und
Abbremsen (103) des Fahrzeugs mit einer ersten vorgegebenen Verzögerung entsprechend dem ersten Bremsbefehl,
**dadurch gekennzeichnet, dass**
der erste Schwellenwert aus einer Summe aus einem äquivalenten virtuellen Soll-Anhalteweg und einem Schnellbremsweg gewonnen wird, der äquivalente virtuelle Soll-Anhalteweg auf der Grundlage eines ersten äquivalenten virtuellen Anhaltewegs und/oder eines zweiten äquivalenten virtuellen Anhaltewegs gewonnen wird, der erste äquivalente virtuelle Anhalteweg eine Strecke ist, die von dem Fahrzeug während des Erfassens des Abstands zwischen dem Fahrzeug und dem vorausfahrenden Fahrzeug zurückgelegt wird, der zweite äquivalente virtuelle Anhalteweg eine Strecke ist, die während des Auslösens des ersten Bremsbefehls durch den Benutzer von dem Fahrzeug zurückgelegt wird, und der Schnellbremsweg eine Strecke ist, die von dem Fahrzeug zurückgelegt wird, nachdem das Fahrzeug mit der ersten vorgegebenen Verzögerung abgebremst wird, und dass der Schnellbremsweg auf der Grundlage eines ersten Bremswegs und/oder eines zweiten Bremswegs und/oder eines dritten Bremswegs gewonnen wird und der erste Bremsweg eine Strecke ist, die von dem Fahrzeug in einem Fall zurückgelegt wird, in dem alle Drehgestelle zum Bremsen in einem normalen Betriebszustand verwendet werden, der zweite Bremsweg eine Strecke ist, die von dem Fahrzeug in einem Fall zurückgelegt wird, in dem alle Drehgestelle zum Bremsen in einem Zustand bei nasser Schiene verwendet werden, und der dritte Bremsweg eine Strecke ist, die von dem Fahrzeug während des Bremsens in dem Zustand bei nasser Schiene zurückgelegt wird, wobei eine vorgegebene Anzahl an Drehgestellen abgeschaltet ist,
das Verfahren ferner Folgendes umfasst:
in einem Fall, in dem der Abstand kleiner oder gleich einem zweiten Schwellenwert ist, Ausgeben eines Alarms, wobei der zweite Schwellenwert größer als der erste Schwellenwert ist und der zweite Schwellenwert auf der Grundlage des ersten Schwellenwerts und eines Mindestalarmintervalls bestimmt wird,
Empfangen eines von dem Benutzer ausgelösten zweiten Bremsbefehls und
Abbremsen des Fahrzeugs mit einer zweiten vorgegebenen Verzögerung auf der Grundlage des zweiten Bremsbefehls, wobei die zweite vorgegebene Verzögerung geringer als die erste vorgegebene Verzögerung ist.

2. Verfahren nach Anspruch 1, bei dem der äquivalente virtuelle Soll-Anhalteweg eine Summe aus dem ersten äquivalenten virtuellen Anhalteweg und dem zweiten äquivalenten virtuellen Anhalteweg ist.

3. Verfahren nach Anspruch 1, bei dem der Schnellbremsweg ein Höchstwert unter dem ersten Bremsweg, dem zweiten Bremsweg und dem dritten Bremsweg ist.

4. Vorrichtung zum Bremsen eines Fahrzeugs, die Folgendes umfasst:
eine Erfassungseinheit (210), die dazu eingerichtet ist, einen Abstand zwischen dem Fahrzeug und einem vorausfahrenden Fahrzeug zu erfassen,
eine erste Alarmeinheit (220), die dazu eingerichtet ist, in einem Fall, in dem der Abstand kleiner oder gleich einem ersten Schwellenwert ist, einen Alarm auszugeben, und
eine erste Bremseinheit (230), die dazu eingerichtet ist, einen von einem Benutzer ausgelösten ersten Bremsbefehl zu empfangen und das Fahrzeug auf der Grundlage des ersten Bremsbefehls mit einer ersten vorgegebenen Verzögerung abzubremsen,
**dadurch gekennzeichnet, dass**
der erste Schwellenwert aus einer Summe aus einem äquivalenten virtuellen Soll-Anhalteweg und einem Schnellbremsweg gewonnen wird, der äquivalente virtuelle Soll-Anhalteweg auf der Grundlage eines ersten äquivalenten virtuellen Anhaltewegs und/oder eines zweiten äquivalenten virtuellen Anhaltewegs gewonnen wird, der erste äquivalente virtuelle Anhalteweg eine Strecke ist, die von dem Fahrzeug während des Erfassens des Abstands zwischen dem Fahrzeug und dem vorausfahrenden Fahrzeug zurückgelegt wird, der zweite äquivalente virtuelle Anhalteweg eine Strecke ist, die während des Auslösens des ersten Bremsbefehls durch den Benutzer von dem Fahrzeug zurückgelegt wird, und der Schnellbremsweg eine Strecke ist, die von dem Fahrzeug zurückgelegt wird, nachdem das Fahrzeug mit der ersten vorgegebenen Verzögerung abgebremst wird, der Schnellbremsweg auf der Grundlage eines ersten Bremswegs und/oder eines zweiten Bremswegs und/oder eines dritten Bremswegs gewonnen wird und der erste Bremsweg eine Strecke ist, die von dem Fahrzeug in einem Fall zurückgelegt wird, in dem alle Drehgestelle zum Bremsen in einem normalen Betriebszustand verwendet werden, der zweite Bremsweg eine Strecke ist, die vom Fahrzeug in einem Fall zurückgelegt wird, in dem alle Drehgestelle zum Bremsen in einem Zustand bei nasser Schiene verwendet werden, und der dritte Bremsweg eine Strecke ist, die vom Fahrzeug während des Bremsens in dem Zustand bei nasser Schiene zurückgelegt wird, wobei eine vorgegebene Anzahl an Drehgestellen abgeschaltet ist,
die Vorrichtung ferner Folgendes umfasst:
eine zweite Alarmeinheit, die dazu eingerichtet ist, in einem Fall, in dem der Abstand kleiner oder gleich einem zweiten Schwellenwert ist, einen Alarm auszugeben, wobei der zweite Schwellenwert größer als der erste Schwellenwert ist und der zweite Schwellenwert auf der Grundlage des ersten Schwellenwerts und eines Mindestalarmintervalls bestimmt wird, und
eine zweite Bremseinheit, die dazu eingerichtet ist, einen vom Benutzer ausgelösten zweiten Bremsbefehl zu empfangen und das Fahrzeug auf der Grundlage des zweiten Bremsbefehls mit einer zweiten vorgegebenen Verzögerung abzubremsen, wobei die zweite vorgegebene Verzögerung geringer als die erste vorgegebene Verzögerung ist.

5. Vorrichtung nach Anspruch 4, bei der der äquivalente virtuelle Soll-Anhalteweg eine Summe aus dem ersten äquivalenten virtuellen Anhalteweg und dem zweiten äquivalenten virtuellen Anhalteweg ist.

6. Vorrichtung nach Anspruch 4, bei der der Schnellbremsweg ein Höchstwert unter dem ersten Bremsweg, dem zweiten Bremsweg und dem dritten Bremsweg ist.

7. Zug mit einer Vorrichtung zum Bremsen eines Fahrzeugs, wobei die Vorrichtung dazu eingerichtet ist, das Verfahren nach einem der Ansprüche 1 bis 3 durchzuführen.

## Revendications

1. Procédé de freinage d'un véhicule, comprenant :
l'acquisition (101) d'une distance entre le véhicule et un véhicule qui le précède ;
l'émission (102) d'une alarme dans le cas où la distance est inférieure ou égale à une première valeur seuil ;
la réception (103) d'une première commande de freinage déclenchée par un utilisateur ; et
le freinage (103) du véhicule à une première décélération prédéfinie, conformément à la première commande de freinage ;
**caractérisé en ce que**
la première valeur seuil est obtenue à partir d'une somme d'une distance d'arrêt virtuelle équivalente cible et d'une distance de freinage d'urgence, la distance d'arrêt virtuelle équivalente cible est obtenue sur la base d'une première distance d'arrêt virtuelle équivalente et/ou d'une deuxième distance d'arrêt virtuelle équivalente, la première distance d'arrêt virtuelle équivalente est une distance parcourue par le véhicule pendant l'acquisition de la distance entre le véhicule et le véhicule qui le précède, la deuxième distance d'arrêt virtuelle équivalente est une distance parcourue par le véhicule pendant le déclenchement de la première commande de freinage par l'utilisateur, et la distance de freinage d'urgence est une distance parcourue par le véhicule dès le freinage du véhicule à la première décélération prédéfinie, et **en ce que** la distance de freinage d'urgence est obtenue sur la base d'une première distance de freinage et/ou d'une deuxième distance de freinage et/ou d'une troisième distance de freinage, et la première distance de freinage est une distance parcourue par le véhicule dans le cas où tous les bogies sont utilisés pour le freinage dans un état de fonctionnement normal, la deuxième distance de freinage est une distance parcourue par le véhicule dans le cas où tous les bogies sont utilisés pour le freinage dans un état de rail mouillé, et la troisième distance de freinage est une distance parcourue par le véhicule pendant le freinage à l'état de rail mouillé avec un nombre prédéfini de bogies déconnectés,
le procédé comprenant en outre :
dans un cas où la distance est inférieure ou égale à une deuxième valeur seuil, l'émission d'une alarme, la deuxième valeur seuil étant supérieure à la première valeur seuil, et la deuxième valeur seuil étant déterminée sur la base de la première valeur seuil et d'un intervalle d'alarme minimum ;
la réception d'une deuxième commande de freinage déclenchée par l'utilisateur ; et
le freinage du véhicule à une deuxième décélération prédéfinie sur la base de la deuxième commande de freinage, la deuxième décélération prédéfinie étant inférieure à la première décélération prédéfinie.

2. Procédé selon la revendication 1, la distance d'arrêt virtuelle équivalente cible étant une somme de la première distance d'arrêt virtuelle équivalente et de la deuxième distance d'arrêt virtuelle équivalente.

3. Procédé selon la revendication 1, la distance de freinage d'urgence étant une valeur maximale parmi la première distance de freinage, la deuxième distance de freinage et la troisième distance de freinage.

4. Dispositif de freinage d'un véhicule, comprenant :
une unité d'acquisition (210) réalisée de manière à acquérir une distance entre le véhicule et un véhicule qui le précède ;
une première unité d'alarme (220) réalisée de manière à émettre une alarme dans le cas où la distance est inférieure ou égale à une première valeur seuil ; et
une première unité de freinage (230) réalisée de manière à recevoir une première commande de freinage déclenchée par un utilisateur et à freiner le véhicule à une première décélération prédéfinie sur la base de la première commande de freinage ;
**caractérisé en ce que**
la première valeur seuil est obtenu à partir d'une somme d'une distance d'arrêt virtuelle équivalente cible et d'une distance de freinage d'urgence, la distance d'arrêt virtuelle équivalente cible est obtenue sur la base d'une première distance d'arrêt virtuelle équivalente et/ou d'une deuxième distance d'arrêt virtuelle équivalente, la première distance d'arrêt virtuelle équivalente est une distance parcourue par le véhicule pendant l'acquisition de la distance entre le véhicule et le véhicule qui le précède, la deuxième distance d'arrêt virtuelle équivalente est une distance parcourue par le véhicule pendant le déclenchement de la première commande de freinage par l'utilisateur, et la distance de freinage d'urgence est une distance parcourue par le véhicule dès le freinage du véhicule à la première décélération prédéfinie, la distance de freinage d'urgence est obtenue sur la base d'une première distance de freinage et/ou d'une deuxième distance de freinage et/ou d'une troisième distance de freinage, et la première distance de freinage est une distance parcourue par le véhicule dans le cas où tous les bogies sont utilisés pour le freinage dans un état de fonctionnement normal, la deuxième distance de freinage est une distance parcourue par le véhicule dans le cas où tous les bogies sont utilisés pour le freinage dans un état de rail mouillé, et la troisième distance de freinage est une distance parcourue par le véhicule pendant le freinage à l'état de rail mouillé avec un nombre prédéfini de bogies déconnectés,
le dispositif comprenant en outre :
une deuxième unité d'alarme réalisée de manière à émettre une alarme dans le cas où la distance est inférieure ou égale à une deuxième valeur seuil, la deuxième valeur seuil étant supérieure à la première valeur seuil, la deuxième valeur seuil étant déterminée sur la base de la première valeur seuil et d'un intervalle d'alarme minimum ; et
une deuxième unité de freinage réalisée de manière à recevoir une deuxième commande de freinage déclenchée par l'utilisateur et à freiner le véhicule à une deuxième décélération prédéfinie sur la base de la deuxième commande de freinage, la deuxième décélération prédéfinie étant inférieure à la première décélération prédéfinie.

5. Dispositif selon la revendication 4, la distance d'arrêt virtuelle équivalente cible étant une somme de la première distance d'arrêt virtuelle équivalente et de la deuxième distance d'arrêt virtuelle équivalente.

6. Dispositif selon la revendication 4, la distance de freinage d'urgence étant une valeur maximale parmi la première distance de freinage, la deuxième distance de freinage et la troisième distance de freinage.

7. Train comprenant un dispositif de freinage d'un véhicule, le dispositif étant réalisé de manière à mettre en œuvre le procédé selon l'une des revendications 1 à 3.
